# EUROPEAN PATENT SPECIFICATION

(11) **EP 3 243 884 B1**
(45) Date of publication and mention of the grant of the patent: **28.10.2020**
(21) Application number: 16835463.7
(22) Date of filing: 11.08.2016
(51) Int. Cl.: C09D 183/04, C09D 5/00, G02B 1/11, C08J 7/04, C09D 5/33, C09D 7/61, C09D 7/65

(54) **RADIATION CURABLE COATING COMPOSITION, LOW-REFRACTIVE-INDEX LAYER, AND ANTIREFLECTIVE FILM**
STRAHLUNGSHÄRTBARE BESCHICHTUNGSZUSAMMENSETZUNG, SCHICHT MIR GERINGEM BRECHUNGSINDEX UND ANTIREFLEXIONSFILM
COMPOSITION DE REVÊTEMENT DURCISSABLE PAR RAYONNEMENT, COUCHE À FAIBLE INDICE DE RÉFRACTION, ET FILM ANTIREFLET

(30) Priority: 11.08.2015 KR 20150113237
(43) Date of publication of application: 15.11.2017
(73) Proprietor: LG Chem, Ltd., Seoul 07336 (KR)
(72) Inventor: KIM, Boo Kyung, Daejeon 34122 (KR); KIM, Hye Min, Daejeon 34122 (KR); SHIM, Jae Hoon, Daejeon 34122 (KR); JUNG, Soon Hwa, Daejeon 34122 (KR)
(74) Representative: Goddar, Heinz J.
(86) International application number: PCT/KR2016/008855
(87) International publication number: WO 2017/026823

(56) References cited:
- EP-A1- 3 223 043
- EP-A1- 3 279 282
- EP-A1- 3 315 305
- EP-A1- 3 378 902
- EP-A1- 3 415 959
- WO-A1-2014/107476
- CN-A- 103 305 036
- KR-A- 20110 013 751
- KR-A- 20130 118 069
- KR-A- 20130 132 094
- DATABASE WPI Week 201080 Thomson Scientific, London, GB; AN 2010-P00149 XP002782248, -& JP 2010 254950 A (SONY CORP) 11 November 2010 (2010-11-11)
- DATABASE WPI Week 200978 Thomson Scientific, London, GB; AN 2009-P02630 XP002782335, -& CN 101 531 839 A (GUANGZHOU CHEM INST CHINESE ACAD) 16 September 2009 (2009-09-16)
- "POSS Enhanced? Thermosets", , 17 December 2009 (2009-12-17), XP055069298, Retrieved from the Internet: URL:http://www.hybridplastics.com/docs/POS S_Thermosets.pdf [retrieved on 2013-07-03]

## Description

### [TECHNICAL FIELD]

The present invention relates to a photocurable coating composition, a low refractive index layer, and an antireflection film. More specifically, the present invention relates to a photocurable coating composition capable of providing a low refractive index layer that simultaneously implements high alkali resistance and scratch resistance while having both low reflectance and high light transmittance, a low refractive index layer that simultaneously implements high alkali resistance and scratch resistance while having both low reflectance and high light transmittance, and an antireflection film that exhibits excellent mechanical properties while enhancing the sharpness of the screen of a display device.

### [BACKGROUND ART]

In general, a flat panel display device such as a PDP or a LCD is equipped with an antireflection film for minimizing the reflection of light incident from the outside.

As methods for minimizing the reflection of light, there exist a method (anti-glare: AG coating) in which a filler such as an inorganic fine particle is dispersed in a resin and coated on a substrate film to impart irregularities; a method (anti-reflection: AR coating) of using the interference of light by forming a plurality of layers having different refractive indexes on a substrate film; and a method for mixing them.

Among them, in the case of the AG coating, the absolute amount of the reflected light is equivalent to that of a general hard coating, but a low reflection effect can be obtained by reducing the amount of light entering the eye using light scattering through irregularities.

However, since the AG coating has poor surface sharpness due to the surface irregularities, many studies on AR coating have been recently conducted.

As for a film using the AR coating, a multi-layer structure in which a hard coating layer (high refractive index layer), a low reflection coating layer, and the like are laminated on a substrate film has been commercialized.

However, in the method of forming a plurality of layers as described above, there is a disadvantage that as the step of forming each layer is separately performed, interlayer adhesion (interfacial adhesion) is weak and scratch resistance lowers.

Accordingly, many studies have been conducted to reduce the absolute reflection amount of light incident from the outside and to increase the scratch resistance of the surface, but the degree of improving the physical properties is insufficient.

In addition, a method of adding a component such as an inorganic filler to enhance the scratch resistance of a polymer film applied to an antireflection film is known. According to this method, the alkali resistance of the polymer film is greatly lowered, making it unsuitable for application in the production process of a polarizing plate or the like.

EP 3 279 282 A1, which is a prior art document pursuant to Art. 54(3) EPC, discloses photocurable coating compositions comprising an urethane (meth)acrylate-based resin, an inorganic filler, a fluorosilsesquioxane substituted with polymerizable functional groups, a photopolymerizable fluorine-based compound, and a photopolymerization initiator, wherein the polysilsesquioxane substituted with one or more reactive functional groups is contained in an amount of 1.4 parts by weight based on 100 parts by weight of the urethane (meth)acrylate-based resin.

### [DETAILED DESCRIPTION OF THE INVENTION]

### [TECHNICAL PROBLEM]

It is an object of the present invention to provide a photocurable coating composition capable of providing a low refractive index layer which simultaneously implements high alkali resistance and scratch resistance while having both low reflectance and high light transmittance.

It is another object of the present invention to provide a low refractive index layer that simultaneously implements high alkali resistance and scratch resistance while having both low reflectance and high light transmittance.

It is a further object of the present invention to provide an antireflection film that exhibits excellent mechanical properties while enhancing the sharpness of the screen of a display device.

### [TECHNICAL SOLUTION]

In order to achieve the above objects, the present invention provides a photocurable coating composition for forming a low refractive index layer, including: a photopolymerizable compound, wherein the photopolymerizable compound is a monomer containing one or more (meth)acrylate or vinyl groups; inorganic fine particles; a polysilsesquioxane substituted with one or more reactive functional groups; a fluorine-based compound containing a photoreactive functional group, wherein the fluorine-based compound containing the photoreactive functional group has a weight-average molecular weight of 2000 to 200,000; and a photopolymerization initiator, wherein the polysilsesquioxane substituted with one or more reactive functional groups is contained in an amount of 0.5 to 25 parts by weight based on 100 parts by weight of the photopolymerizable compound, wherein the inorganic fine particles are hollow silica particles having a number average particle diameter of 10 nm to 100 nm.

In addition, the present invention provides a low refractive index layer including a photo-cured product of the photocurable coating composition described above.

Further, the present invention provides an antireflection film including the low refractive index layer described above, and a hard coating layer formed on one surface of the low refractive index layer.

Hereinafter, the photocurable coating composition, the low refractive index layer, and the antireflection film according to specific embodiments of the present invention will be described in more detail.

In the present specification, a photopolymerizable compound collectively refers to a compound which causes a polymerization reaction when irradiated with light, for example, when irradiated with visible light or ultraviolet light.

Further, a (meth)acryl refers to including both acryl and methacryl.

Furthermore, a (co)polymer refers to including both a copolymer and a homopolymer.

Moreover, hollow silica particles refer to silica particles derived from a silicon compound or an organosilicon compound, in which voids are present on the surface and/or inside of the silica particles.

According to one embodiment of the present invention, there may be provided a photocurable coating composition for forming a low refractive index layer, including: a photopolymerizable compound, wherein the photopolymerizable compound is a monomer containing one or more (meth)acrylate or vinyl groups; inorganic fine particles; a polysilsesquioxane substituted with one or more reactive functional groups; a fluorine-based compound containing a photoreactive functional group, wherein the fluorine-based compound containing the photoreactive functional group has a weight-average molecular weight of 2000 to 200,000; and a photopolymerization initiator, wherein the polysilsesquioxane substituted with one or more reactive functional groups is contained in an amount of 0.5 to 25 parts by weight based on 100 parts by weight of the photopolymerizable compound, wherein the inorganic fine particles are hollow silica particles having a number average particle diameter of 10 nm to 100 nm.

The present inventors conducted studies on a low refractive index layer and an antireflection film, and found through experiments that when a photocurable coating composition including a polysilsesquioxane substituted with one or more reactive functional groups in a specific amount is used, it is possible to provide a low refractive index layer that can not only implement low reflectance and high light transmittance, but also ensure excellent abrasion resistance and scratch resistance while improving alkali resistance, and an antireflection film that exhibits excellent mechanical properties while enhancing the sharpness of the screen of a display device, thereby completing the present invention.

The low refractive index layer provided from the photocurable coating composition of one embodiment described above can improve the sharpness of the screen of the display device and also has excellent scratch resistance and alkali resistance, and thus it can be easily applied to a production process of a display device or a polarizing plate without particular limitation.

In particular, in the case of the low refractive index layer obtained from the photocurable coating composition of the one embodiment, because appearance characteristics such as reflectance or light transmittance or mechanical properties such as abrasion resistance and scratch resistance are not greatly reduced even when exposed to an alkali, the process of applying an additional protection film for protecting the outer surface can be omitted, and thus the production process can be simplified and production costs can be reduced.

Specifically, in the case of the low refractive index layer obtained from the photocurable coating composition of the embodiment, it is confirmed that the appearance characteristics such as average reflectance or color, as well as scratch resistance, show a change rate that is not particularly high even when exposed to an alkali, and thus a physical-chemical change due to alkali exposure is relatively small.

In the past, a method of adding various particles in the size of nanometers (for example, particles of silica, alumina, zeolite, etc.) had been mainly attempted to improve the scratch resistance of the low refractive index layer included in the antireflection film. However, according to this method, the scratch resistance could be secured to a certain extent, but not only did the nanometer sized particles show a low surface treatment rate, but also there was a limitation in that the alkali resistance was significantly reduced with an increase in the specific surface area exposed to the pretreatment solution due to the small size.

On the contrary, the photocurable coating composition of the one embodiment includes 0.5 to 25 parts by weight or 1.5 to 19 parts by weight of a polysilsesquioxane substituted with one or more reactive functional groups based on 100 parts by weight of the photopolymerizable compound, thereby providing a low refractive index layer capable of simultaneously implementing high alkali resistance and scratch resistance while having both low reflectance and high light transmittance, and further, the performance and quality of a finally manufactured antireflection film or a display device to which such an antireflection film is applied may be enhanced.

Specifically, as reactive functional groups are present on the surface of a polysilsesquioxane substituted with one or more reactive functional groups, the mechanical properties, for example, scratch resistance, of the coating film or the binder resin formed upon photocuring of the photocurable coating compositions may be enhanced.

In addition, the polysilsesquioxane substituted with one or more reactive functional groups may enhance the alkali resistance of the coating film or the binder resin formed upon photocuring of the photocurable coating composition since a siloxane bond (-Si-O-) is located inside the molecule, unlike the case where fine particles of silica, alumina, zeolite, etc. known in the past are used.

As described above, the photocurable coating composition includes 0.5 to 25 parts by weight or 1.5 to 19 parts by weight of the polysilsesquioxane substituted with one or more reactive functional groups based on 100 parts by weight of the photopolymerizable compound.

When the content of the polysilsesquioxane substituted with one or more reactive functional groups relative to the photopolymerizable compound in the photocurable coating composition is too small, it may be difficult to ensure sufficient alkali resistance and scratch resistance of the coating film or the binder resin formed upon photocuring of the photocurable coating composition.

Moreover, when the content of the polysilsesquioxane substituted with one or more reactive functional groups relative to the photopolymerizable compound in the photocurable coating composition is too large, the transparency of the low refractive index layer or antireflection film produced from the photocurable coating composition may be decreased, and the scratch resistance may be somewhat decreased.

The reactive functional group substituted in the polysilsesquioxane may include at least one functional group selected from the group consisting of an alcohol, an amine, a carboxylic acid, an epoxide, an imide, a (meth)acrylate, a nitrile, a norbornene, an olefin [ally, cycloalkenyl, vinyldimethylsilyl, etc.], polyethylene glycol, a thiol, and a vinyl group, and may preferably be an epoxide or a (meth)acrylate.

More specific examples of the reactive functional group include (meth)acrylates, alkyl(meth)acrylates having 1 to 20 carbon atoms, alkyl cycloalkyl epoxides having 3 to 20 carbon atoms, and cycloalkane epoxides having 1 to 10 carbon atoms.

The alkyl(meth)acrylate means that the other part of 'alkyl' that is not bonded to (meth)acrylate is a bonding position, the cycloalkyl epoxide means that the other part of 'cycloalkyl' that is not bonded to an epoxide is a bonding position, and the alkyl cycloalkane epoxide means that the other part of 'alkyl' that is not bonded to a cycloalkane epoxide is a bonding position.

On the other hand, the polysilsesquioxane substituted with one or more reactive functional groups may further include at least one unreactive functional group selected from the group consisting of a linear or branched alkyl group having 1 to 30 carbon atoms, a cyclohexyl group having 6 to 30 carbon atoms, and an aryl group having 6 to 30 carbon atoms, in addition to the above-described reactive functional group.

As such, as the reactive functional groups and the unreactive functional groups are surface-substituted in the polysilsesquioxane, the siloxane bond (-Si-O-) in the polysilsesquioxane substituted with one or more reactive functional groups is located inside the molecule and is not exposed to the outside, thereby further enhancing the alkali resistance of the coating film or the binder resin formed upon photocuring of the photocurable coating composition.

Particularly, when the unreactive functional group introduced into the polysilsesquioxane together with the reactive functional group is a linear or branched alkyl group having 6 or more carbon atoms or 6 to 30 carbon atoms, or a cyclohexyl group having 6 to 30 carbon atoms, the effect of improving the alkali resistance of the coating film or the binder resin is higher.

On the other hand, the polysilsesquioxane may be represented by (RSiO_{1.5})ₙ (where n is 4 to 30 or 8 to 20), and may have various structures such as random, a ladder type, a cage type, a partial cage type, etc.

However, in order to enhance the physical properties and quality of the low refractive index layer and antireflection film produced from the photocurable coating composition of the one embodiment, a polyhedral oligomeric silsesquioxane having a cage structure, in which one or more reactive functional groups are substituted, may be used as the polysilsesquioxane substituted with one or more reactive functional groups.

Further, more preferably, the polyhedral oligomeric silsesquioxane having a cage structure, in which one or more functional groups are substituted, may include 8 to 20 silicon atoms in a molecule.

At least one or all silicon atoms of the polysilsesquioxane substituted with one or more reactive functional groups may be substituted with reactive functional groups described above, further, at least one silicon atom of the polysilsesquioxane substituted with one or more reactive functional groups may be substituted with a reactive functional group, and still further, the silicon atoms in which unreactive functional groups are substituted may be substituted with the unreactive functional groups described above.

As at least one silicon atom of the polysilsesquioxane substituted with one or more reactive functional groups is substituted with a reactive functional group, the mechanical properties of the coating film or the binder resin formed upon photocuring of the photocurable coating composition may be enhanced. Further, as the remaining silicon atoms are substituted with unreactive functional groups, steric hindrance appears molecular structurally, which significantly decreases the frequency or probability of exposure of the siloxane bond (-Si-O-) to the outside, and thus it is possible to enhance the alkali resistance of the coating film or the binder resin formed upon photocuring of the photocurable coating composition.

More specifically, when the polysilsesquioxane is substituted with both reactive functional groups and unreactive functional groups, the molar ratio of the reactive functional group to the unreactive functional group substituted in the polysilsesquioxane is 0.20 or more or 0.3 or more, and may be 0.20 to 6, 0.3 to 4, or 0.4 to 3.

When the ratio between the reactive functional group and the unreactive functional group substituted in the polysilsesquioxane is within the above range, the steric hindrance in the polysilsesquioxane molecule may be maximized, and accordingly, the frequency and probability of exposure of the siloxane bond (-Si-O-) to the outside may be significantly reduced, and the mechanical properties or the alkali resistance of the coating film or the binder resin formed upon photocuring of the photocurable coating composition may be further enhanced.

In addition, when both the reactive functional groups and unreactive functional groups are substituted in the polysilsesquioxane, 100 mol% of the silicon atoms of the polysilsesquioxane substituted with one or more reactive functional groups may be substituted with a reactive functional group and a unreactive functional group, while satisfying the molar ratio of the reactive functional group to the non-functional reactive group substituted in polysilsesquioxane.

On the other hand, examples of the polyhedral oligomeric silsesquioxane (POSS) having a cage structure in which at least one reactive functional group is substituted include: POSS in which at least one alcohol is substituted, such as TMP diolisobutyl POSS, cyclohexanediol isobutyl POSS, 1,2-propanediollsobutyl POSS, octa(3-hydroxy-3 methylbutyldimethylsiloxy) POSS, etc.; POSS in which at least one amine is substituted, such as aminopropylisobutyl POSS, aminopropylisooctyl POSS, aminoethylaminopropyl isobutyl POSS, N-phenylaminopropyl POSS, N-methylaminopropyl isobutyl POSS, octaammonium POSS, aminophenylcyclohexyl POSS, aminophenylisobutyl POSS, etc.; POSS in which at least one carboxylic acid is substituted, such as maleamic acid-cyclohexyl POSS, maleamic acid-isobutyl POSS, octamaleamic acid POSS, etc; POSS in which at least one epoxide is substituted, such as epoxycyclohexylisobutyl POSS, epoxycyclohexyl POSS, glycidyl POSS, glycidylethyl POSS, glycidylisobutyl POSS, glycidylisooctyl POSS, etc.; POSS in which at least one imide is substituted, such as POSS maleimide cyclohexyl, POSS maleimide isobutyl, etc.; POSS in which at least one (meth)acrylate is substituted, such as acryloisobutyl POSS, (meth)acrylisobutyl POSS, (meth)acrylate cyclohexyl POSS, (meth)acrylate isobutyl POSS, (meth)acrylate ethyl POSS, (meth)acrylethyl POSS, (meth)acrylate isooctyl POSS, (meth)acrylisooctyl POSS, (meth)acrylphenyl POSS, (meth)acryl POSS, acrylo POSS, etc.; POSS in which at least one nitrile group is substituted, such as cyanopropylisobutyl POSS, etc.; POSS in which at least one norbornene is substituted, such as norbornenylethylethyl POSS, norbornenylethylisobutyl POSS, norbornenylethyl disilanoisobutyl POSS, trisnorbornenylisobutyl POSS, etc.; POSS in which at least one vinyl group is substituted, such as allylisobutyl POSS, monovinylisobutyl POSS, octacyclohexenyldimethylsilyl POSS, octavinyldimethylsilyl POSS, octavinyl POSS, etc.; POSS in which at least one olefin is substituted, such as allylisobutyl POSS, monovinylisobutyl POSS, octacyclohexenyldimethylsilyl POSS, octavinyldimethylsilyl POSS, octavinyl POSS, etc.; POSS in which a PEG having 5 to 30 carbon atoms is substituted; or POSS in which at least one thiol group is substituted, such as mercaptopropylisobutyl POSS, mercaptopropylisooctyl POSS, etc.

On the other hand, the photocurable coating composition of the one embodiment may include a fluorine-based compound containing a photoreactive functional group.

As the fluorine-based compound containing the photoreactive functional group is included, the low refractive index layer and the antireflection film manufactured from the photocurable coating composition may have reduced reflectance and improved light transmittance, and may further enhance the alkali resistance and scratch resistance.

The fluorine-based compound may include or be substituted with at least one photoreactive functional group, and the photoreactive functional group refers to a functional group which can participate in a polymerization reaction by irradiation of light, for example, by irradiation of visible light or ultraviolet light.

The photoreactive functional group may include various functional groups known to be able to participate in a polymerization reaction by irradiation of light. Specific examples thereof include a (meth)acrylate group, an epoxide group, a vinyl group, and a thiol group.

The fluorine-based compound containing the photoreactive functional group may have a fluorine content of 1 to 25 % by weight.

When the content of fluorine in the fluorine-based compound containing the photoreactive functional group is too small, the fluorine component cannot be sufficiently arranged on the surface of the final product obtained from the photocurable coating composition of the above one embodiment, and thus it may be difficult to sufficiently secure the physical properties such as alkali resistance.

In addition, when the content of fluorine in the fluorine-based compound containing the photoreactive functional group is too large, the surface characteristics of the final product obtained from the photocurable coating composition of the one embodiment may be decreased, or the incidence rate of defective products may be increased in the subsequent process for obtaining the final product.

The fluorine-based compound containing the photoreactive functional group may further include silicon or a silicon compound.

That is, the fluorine-based compound containing the photoreactive functional group may optionally contain silicon or a silicon compound therein, and specifically, the content of silicon in the fluorine-based compound containing the photoreactive functional group may be 0.1 % by weight to 20 % by weight.

The silicon contained in the fluorine-based compound containing the photoreactive functional group may serve to increase transparency by preventing the generation of haze in the low refractive index layer obtained from the photocurable coating composition of the above embodiment.

On the other hand, if the content of silicon in the fluorine-based compound containing the photoreactive functional group becomes too large, the alkali resistance of the low refractive index layer obtained from the photocurable coating composition of the one embodiment may be reduced.

The fluorine-based compound containing the photoreactive functional group has a weight-average molecular weight (in terms of polystyrene measured by GPC method) of 2000 to 200,000.

When the weight-average molecular weight of the fluorine-based compound containing the photoreactive functional group is too small, the low refractive index layer obtained from the photocurable coating composition of the embodiment may not have sufficient alkali resistance characteristics.

Further, when the weight-average molecular weight of the fluorine-based compound containing the photoreactive functional group is too large, the low refractive index layer obtained from the photocurable coating composition of the embodiment may not have sufficient durability and scratch resistance.

Specifically, the fluorine-based compound containing the photoreactive functional group may include: i) an aliphatic compound or an aliphatic cyclic compound in which at least one photoreactive functional group is substituted and at least one fluorine is substituted on at least one carbon; ii) a heteroaliphatic compound or a heteroaliphatic cyclic compound in which at least one photoreactive functional group is substituted, at least one hydrogen is substituted with fluorine, and at least one carbon is substituted with silicon; iii) a polydialkylsiloxane-based polymer (for example, a polydimethylsiloxane-based polymer) in which at least one photoreactive functional group is substituted and at least one fluorine is substituted on at least one silicon; or iv) a polyether compound in which at least one photoreactive functional group is substituted and at least one hydrogen is substituted with fluorine, or a mixture of two or more of i) to iv), or a copolymer thereof.

The photocurable coating composition may contain 1 to 75 parts by weight of the fluorine-based compound containing the photoreactive functional group based on 100 parts by weight of the photopolymerizable compound.

When the fluorine-based compound containing the photoreactive functional group is added in an excessive amount relative to the photopolymerizable compound, the coating properties of the photocurable coating composition of the embodiment may be reduced, or the low refractive index layer obtained from the photocurable coating composition of the embodiment above may not have sufficient durability or scratch resistance.

In addition, when the amount of the fluorine-based compound containing the photoreactive functional group relative to the photopolymerizable compound is too small, the low refractive index layer obtained from the photocurable coating composition of the embodiment may not have sufficient alkali resistance.

On the other hand, the photopolymerizable compound may include a monomer or an oligomer containing a (meth)acrylate or vinyl group.

In accordance with the invention, the photopolymerizable compound is a monomer containing one or more, two or more, or three or more of (meth)acrylate or vinyl groups.

Specific examples of the monomer containing (meth)acrylate may include pentaerythritol tri(meth)acrylate, pentaerythritol tetra(meth)acrylate, dipentaerythritol penta(meth)acrylate, dipentaerythritol hexa(meth)acrylate, tripentaerythritol hepta(meth)acrylate, trilene diisocyanate, xylene diisocyanate, hexamethylene diisocyanate, trimethylolpropane tri(meth)acrylate, trimethylolpropane polyethoxy tri(meth)acrylate, trimethylolpropane trimethacrylate, ethylene glycol dimethacrylate, butanediol dimethacrylate, hexaethyl methacrylate, butyl methacrylate, or a mixture of two or more thereof.

Specific examples of the monomer containing a vinyl group include divinylbenzene, styrene, and para-methyl styrene.

The content of the photopolymerizable compound in the photocurable coating composition is not particularly limited. However, considering the mechanical properties of the finally manufactured low refractive index layer and the antireflection film, the content of the photopolymerizable compound in the solid content of the photocurable coating composition may be 20 % by weight to 80 % by weight.

The solid content of the photocurable coating composition refers only to the solid components excluding the liquid components in the photocurable coating composition, for example, organic solvents, which may be optionally included as described below.

On the other hand, the photopolymerizable compound may further include a fluorine-based (meth)acrylate-based compound in addition to the monomer or oligomer described above.

When the fluorine-based (meth)acrylate-based compound is further included, the weight ratio of the fluorine-based (meth)acrylate-based compound to the monomer or oligomer containing a (meth)acrylate or vinyl group may be 0.1 % to 10 %.

Specific examples of the fluorine-based (meth)acrylate-based compound include at least one compound selected from the group consisting of the following Chemical Formulae 11 to 15.

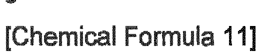

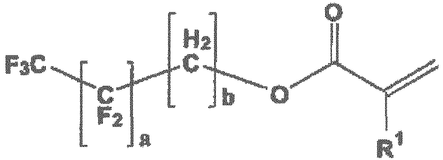

In the above Chemical Formula 11, R¹ is a hydrogen group or an alkyl group having 1 to 6 carbon atoms, a is an integer of 0 to 7, and b is an integer of 1 to 3.

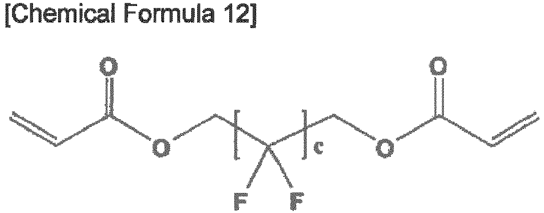

In the above Chemical Formula 12, c is an integer of 1 to 10.

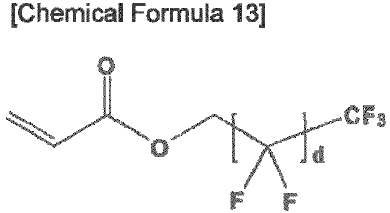

In the above Chemical Formula 13, d is an integer of 1 to 11.

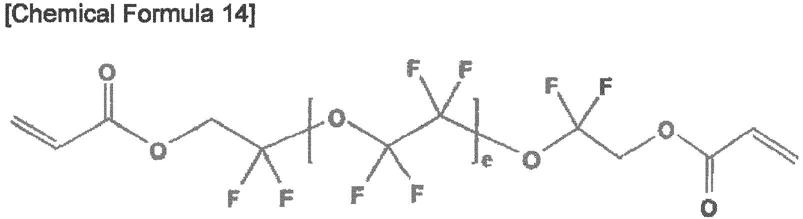

In the above Chemical Formula 14, e is an integer of 1 to 5.

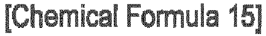

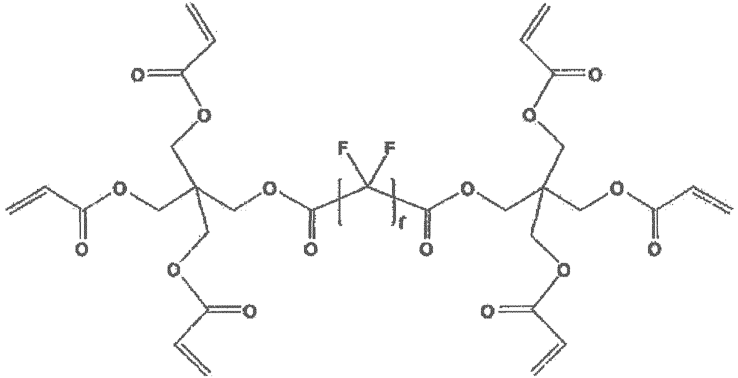

In the above Chemical Formula 15, f is an integer of 4 to 10.

The inorganic fine particle means an inorganic particle having a diameter of nanometer or micrometer units.

Specifically, the inorganic fine particles are hollow silica particles having a number average particle diameter of 10 nm to 100 nm.

The hollow silica particles refer to silica particles in which voids are present on the surface and/or inside of the particles.

The hollow silica particles may have a lower refractive index than that of the particles filled therein, and thus can exhibit excellent antireflection properties.

The hollow silica particles have a number average particle diameter of 10 nm to 100 nm, preferably 20 nm to 70 nm, and more preferably 30 nm to 70 nm, and the shape of the particles is preferably spherical but it may be amorphous.

In addition, as for the hollow silica particles, hollow silica particles whose surface is coated with a fluorine-based compound may be used either alone or in combination with hollow silica particles whose surface is not coated with a fluorine-based compound.

When the surface of the hollow silica particles is coated with a fluorine-based compound, the surface energy may be further reduced. Accordingly, the hollow silica particles may be more uniformly distributed in the photocurable coating composition of the embodiment, and the durability and scratch resistance of the film obtained from the photocurable coating composition may be further improved.

As a method of coating a fluorine-based compound onto the surface of the hollow silica particles, a conventionally known particle coating method, a polymerization method, and the like may be used without any limitation. For example, the hollow silica particles and the fluorine-based compound may be subjected to a sol-gel reaction in the presence of water and a catalyst, and thereby the fluorine-based compound may be bonded to the surface of the hollow silica particles via a hydrolysis and condensation reaction.

Further, the hollow silica particles may be included in the composition in a colloidal phase dispersed in a predetermined dispersion medium.

The colloidal phase containing the hollow silica particles may contain an organic solvent as a dispersion medium.

Herein, the hollow silica may include a predetermined functional group substituted on the surface thereof to be more readily dispersed in the organic solvent.

Examples of organic functional groups which can be substituted on the surface of the hollow silica particles are not particularly limited, but for example, a (meth)acrylate group, a vinyl group, a hydroxyl group, an amine group, an allyl group, an epoxy group, a hydroxyl group, an isocyanate group, an amine group, fluorine, etc. may be substituted on the surface of the hollow silica.

The solid content of the hollow silica particles in the colloidal phase of the hollow silica particles may be determined in consideration of the range of content of the hollow silica in the photocurable coating composition of the one embodiment and the viscosity of the photocurable coating composition, etc., and for example, the solid content of the hollow silica particles in the colloidal phase may include 5 % by weight to 60 % by weight.

Herein, examples of the organic solvent in the dispersion medium include alcohols such as methanol, isopropyl alcohol, ethylene glycol, butanol, etc.; ketones such as methyl ethyl ketone, methyl isobutyl ketone, etc.; aromatic hydrocarbons such as toluene, xylene, etc.; amides such as dimethylformamide, dimethylacetamide, N-methylpyrrolidone; etc.; esters such as ethyl acetate, butyl acetate, gamma-butyrolactone, etc; ethers such as tetrahydrofuran, 1,4-dioxane, etc.; or a mixture thereof.

The photocurable coating composition may include 10 to 320 parts by weight or 50 to 200 parts by weight of the hollow silica particles based on 100 parts by weight of the photopolymerizable compound. When the hollow particles are added in an excessive amount, the scratch resistance and abrasion resistance of the coating film may be reduced due to a decrease in the content of the binder.

As the photopolymerization initiator, any compound known to be usable in the photocurable resin composition may be used without particular limitation. Specifically, a benzophenone-based compound, an acetophenone-based compound, a biimidazole-based compound, a triazine-based compound, an oxime-based compound, or a mixture of two or more thereof may be used.

The photopolymerization initiator may be used in an amount of 1 to 100 parts by weight based on 100 parts by weight of the photopolymerizable compound.

When the amount of the photopolymerization initiator is too small, the photocurable coating composition may not be fully cured in the photocuring step, and thus residual substances may appear.

When the amount of the photopolymerization initiator is too large, the unreacted initiator may remain as an impurity or the crosslinking density may be reduced, so that the mechanical properties of the produced film may be lowered or the reflectance may be significantly increased.

On the other hand, the photocurable coating composition may further include an organic solvent.

Non-limiting examples of the organic solvent include ketones, alcohols, acetates, and ethers, or mixtures of two or more thereof.

Specific examples of the organic solvent may include ketones such as methyl ethyl ketone, methyl isobutyl ketone, acetylacetone, isobutyl ketone, etc.; alcohols such as methanol, ethanol, n-propanol, i-propanol, n-butanol, i-butanol, t-butanol, etc.; acetates such as ethyl acetate, i-propyl acetate, , polyethylene glycol monomethyl ether acetate, etc.; ethers such as tetrahydrofuran, propylene glycol monomethyl ether, etc.; or a mixture of two or more thereof.

The organic solvent may be added at the time of mixing the respective components to be included in the photocurable coating composition, or may be included in the photocurable coating composition while the respective components are added to the organic solvent in a dispersed or mixed state.

When the content of the organic solvent in the photocurable coating composition is too small, the flowability of the photocurable coating composition may be reduced, resulting in a defect such as generation of streaks in the finally produced film.

Further, when the organic solvent is added in an excessive amount, the solid content is lowered, and the coating and film formation are not sufficient, so that the physical properties or the surface characteristics of the film may be reduced, and defects may occur during the drying and curing processes.

Accordingly, the photocurable coating composition may include the organic solvent such that the concentration of the total solid content of the components contained therein may be 1 % by weight to 50 % by weight or 2 % by weight to 20 % by weight.

On the other hand, according to another embodiment of the invention, a low refractive index layer including a photo-cured product of the photocurable coating composition may be provided.

As described above, a low refractive index layer provided from a photocurable coating composition in which a polysilsesquioxane substituted with one or more reactive functional groups is contained in a specific amount can not only implement low reflectance and high light transmittance but also ensure excellent abrasion resistance and scratch resistance while improving alkali resistance, and it can be easily applied to a production process of a display device or a polarizing plate without particular limitation.

In particular, in the case of the low refractive index layer, because appearance characteristics such as reflectance or light transmittance or mechanical properties such as abrasion resistance and scratch resistance are not greatly reduced even when exposed to an alkali, the process of applying an additional protection film for protecting the outer surface can be omitted, and thus the production process can be simplified and production costs can be reduced.

The properties possessed by the low refractive index layer are attributable to the polysilsesquioxane substituted with one or more reactive functional groups contained in a specific amount in the photocurable coating composition of the above embodiment.

Specifically, the polysilsesquioxane substituted with one or more reactive functional groups may have a reactive functional group on its surface, and thereby the mechanical properties, for example scratch resistance, of the low refractive index layer can be increased, and the alkali resistance of the low refractive index layer can be improved, unlike the case of using fine particles such as silica, alumina, zeolite, or the like which are previously known in the art.

Specifically, it is confirmed that the appearance characteristics such as the average reflectance or color, and the scratch resistance of the low refractive index layer, show a change rate that is not excessively high even when exposed to an alkali, and the physical-chemical change due to alkali exposure is relatively small.

The low refractive index layer may include a binder resin including a cross-linked polymer between a photopolymerizable compound and a polysilsesquioxane substituted with one or more reactive functional groups, and an inorganic fine particle dispersed in the binder resin.

Further, as described above, the low refractive index layer may include a portion derived from a fluorine-based compound containing a photoreactive functional group.

As the fluorine-based compound containing the photoreactive functional group is included, the low refractive index layer and the antireflection film can have lower reflectance and improved light transmittance, and can further enhance alkali resistance and scratch resistance.

Thus, the binder resin may further include a crosslinked polymer between a photopolymerizable compound, a fluorine-containing compound having a photoreactive functional group, and polysilsesquioxane substituted with one or more reactive functional groups.

The weight ratio of the portion derived from the polysilsesquioxane substituted with one or more reactive functional groups to the portion derived from the photopolymerizable compound in the binder resin may be 0.005 to 0.25 or 0.015 to 0.19.

The content of the polysilsesquioxane substituted with one or more reactive functional groups includes all of the contents described above with respect to the photocurable coating composition of one embodiment.

The low refractive index layer can be obtained by coating the hard coating composition onto a predetermined substrate, and then photocuring the coated product.

The specific type and thickness of the substrate are not particularly limited, and any substrate known to be usable in the production of a low refractive index layer or the antireflection film may be used without particular limitation.

A method and apparatus conventionally used for coating the photocurable coating composition may be used without particular limitation, and for example, a bar coating method such as Meyer bar method, a gravure coating method, a 2-roll reverse coating method, a vacuum slot die coating method, a 2-roll coating method, etc. may be used.

The low refractive index layer may have a thickness of 1 nm to 300 nm, or 50 nm to 200 nm.

Accordingly, the thickness of the photocurable coating composition coated onto the predetermined substrate may be about 1 nm to 300 nm, or 50 nm to 200 nm.

In the step of photocuring the photocurable coating composition, ultraviolet rays or visible rays having a wavelength of 200 nm to 400 nm may be irradiated, and an exposure dose during irradiation is preferably 100 to 4000 mJ/cm².

The exposure time is not particularly limited, and may be appropriately adjusted depending on the exposure apparatus used, the wavelength of the irradiation light, or the exposure amount.

In addition, in the step of photocuring the photocurable coating composition, nitrogen purging, etc. may be performed in order to apply a nitrogen atmosphere condition.

The low refractive index layer of the above embodiment can have an average reflectance of 2.5 % or less, 1.5 % or less, or 1.3 % or less.

On the other hand, according to another embodiment of the invention, an antireflection film including the low refractive index layer, and a hard coating layer formed on one surface of the low refractive index layer, can be provided.

The contents relating to the low refractive index layer include all the contents described in the above embodiment.

On the other hand, the hard coating layer can usually use a commonly known hard coating layer without particular limitation.

As an example of the hard coating film, a hard coating film including a binder resin containing a photocurable resin and a high molecular weight (co)polymer having a weight average molecular weight of 10,000 or more, and an organic or inorganic fine particle dispersed in the binder resin, can be mentioned.

The high molecular weight (co)polymer may be at least one selected from the group consisting of a cellulose-based polymer, an acrylic-based polymer, a styrene-based polymer, an epoxide-based polymer, a nylon-based polymer, a urethane-based polymer, and a polyolefin-based polymer.

The photocurable resin contained in the hard coating layer is a polymer of a photocurable compound which can cause a polymerization reaction when irradiated with light such as ultraviolet rays, and may be one conventionally used in the art.

Specifically, the photocurable resin may include: at least one selected from the group consisting of a reactive acrylate oligomer group including a urethane acrylate oligomer, an epoxide acrylate oligomer, a polyester acrylate, and a polyether acrylate; and a polyfunctional acrylate monomer including dipentaerythritol hexaacrylate, dipentaerythritol hydroxy pentaacrylate, pentaerythritol tetraacrylate, pentaerythritol triacrylate, trimethylene propyl triacrylate, propoxylated glycerol triacrylate, trimethylpropane ethoxy triacrylate, 1,6-hexanediol diacrylate, propoxylated glycerol triacrylate, tripropylene glycol diacrylate, and ethylene glycol diacrylate.

The organic or inorganic fine particles may have a particle diameter of 1 µm to 10 µm.

The organic or inorganic fine particles may be organic fine particles including an acrylic-based resin, a styrene-based resin, an epoxide resin, and a nylon resin, or may be inorganic fine particles including silicon oxide, titanium dioxide, indium oxide, tin oxide, zirconium oxide, or zinc oxide.

The hard coating film may be formed from an anti-glare coating composition including organic or inorganic fine particles, a photocurable resin, a photoinitiator, and a high molecular weight (co)polymer having a weight average molecular weight of 10,000 or more.

On the other hand, as another example of the hard coating film, a hard coating film including a binder resin of a photocurable resin and an antistatic agent dispersed in the binder resin can be exemplified.

The photocurable resin contained in the hard coating layer is a polymer of a photocurable compound which can cause a polymerization reaction when irradiated with light such as ultraviolet rays, and may be one conventionally used in the art.

Preferably, however, the photocurable compound may be a polyfunctional (meth)acrylate-based monomer or oligomer, wherein the number of (meth)acrylate functional groups is 2 to 10, preferably 2 to 8, and more preferably 2 to 7, which is advantageous in terms of securing the physical properties of the hard coating layer.

More preferably, the photocurable compound may be at least one selected from the group consisting of pentaerythritol tri(meth)acrylate, pentaerythritol tetra(meth)acrylate, dipentaerythritol penta(meth)acrylate, dipentaerythritol hexa(meth)acrylate, dipentaerythritol hepta(meth)acrylate, tripentaerythritol hepta(meth)acrylate, trilene diisocyanate, xylene diisocyanate, hexamethylene diisocyanate, trimethylolpropane tri(meth)acrylate, and trimethylolpropane polyethoxy tri(meth)acrylate.

The antistatic agent may be a quaternary ammonium salt compound, a conductive polymer, or a mixture thereof.

Here, the quaternary ammonium salt compound may be a compound having at least one quaternary ammonium salt group in the molecule, and a low molecular weight form or a high molecular weight form may be used without limitation.

Further, as for the conductive polymer, a low molecular weight form or a high molecular form can be used without limitation, and its type is not particularly limited as long as it may be one that is conventionally used in the technical field to which the present invention belongs.

The hard coating film including a photocurable resin binder resin, and an antistatic agent dispersed in the binder resin, may further include at least one compound selected from the group consisting of an alkoxysilane-based oligomer and a metal alkoxide-based oligomer.

The alkoxysilane-based compound may be one that is conventionally used in the art, but preferably includes at least one compound selected from the group consisting of tetramethoxysilane, tetraethoxysilane, tetraisopropoxysilane, methyltrimethoxysilane, methyltriethoxysilane, methacryloxypropyl trimethoxysilane, glycidoxypropyl trimethoxysilane, and glycidoxypropyl triethoxysilane.

In addition, the metal alkoxide-based oligomer can be prepared through a sol-gel reaction of a composition including a metal alkoxide-based compound and water.

The sol-gel reaction can be carried out by a method similar to the method for producing an alkoxysilane-based oligomer described above.

However, since the metal alkoxide compound can react rapidly with water, the sol-gel reaction is carried out by diluting the metal alkoxide compound in an organic solvent and then slowly dripping water thereto.

In this case, it is preferable that the molar ratio (based on metal ions) of the metal alkoxide compound to water is adjusted within the range of 3 to 170, in consideration of the reaction efficiency and the like.

Here, the metal alkoxide-based compound may be at least one compound selected from the group consisting of titanium tetra-isopropoxide, zirconium isopropoxide, and aluminum isopropoxide.

On the other hand, the antireflection film may further include a substrate bonded to the other surface of the hard coating layer.

The substrate may be a transparent film having light transmittance of 90 % or more and haze of 1 % or less.

The material of the substrate may be a triacetyl cellulose, a cycloolefin polymer, a polyacrylate, a polycarbonate, a polyethylene terephthalate, or the like.

In addition, the thickness of the substrate film may be 10 *µ*m to 300 *µ*m in consideration of productivity and the like.

However, the present invention is not limited thereto.

### [ADVANTAGEOUS EFFECTS]

According to the present invention, a photocurable coating composition capable of providing a low refractive index layer that simultaneously implements high alkali resistance and scratch resistance while having both low reflectance and high light transmittance, a low refractive index layer obtained from the photocurable coating composition, and an antireflection film that exhibits excellent mechanical properties while enhancing the sharpness of the screen of a display device, may be provided.

In the case of the low refractive index layer, because appearance characteristics such as reflectance or light transmittance or mechanical properties such as wear resistance and scratch resistance are not greatly reduced even when exposed to an alkali, the process of applying an additional protection film for protecting the outer surface can be omitted, and thus the production process can be simplified and production costs can be reduced.

### [DETAILED DESCRIPTION OF THE EMBODIMENTS]

Specific embodiments of the present invention will be described in more detail by way of examples. However, the examples are for illustrative purposes only, and the content of the present invention is not intended to be limited by these examples.

### <Preparation Examples: Preparation of hard coating film>

### Preparation Example 1: Preparation of hard coating film 1 (HD1)

### (1) Preparation of hard coating film 1 (HD1)

A salt-type antistatic hard coating solution (solid content: 50 % by weight, product name: LJD-1000, manufactured by KYOEISHA Chemical Co., Ltd.) was coated onto a triacetyl cellulose film with a #10 Mayer bars and dried at 90 °C for 1 minute. Ultraviolet rays at 150 mJ/cm² were then irradiated onto the dried product to obtain a hard coating film (HD1) having a thickness of 10 *µ*m.

### Preparation Example 2: Preparation of hard coating film 2 (HD2)

30 g of pentaerythritol triacrylate, 2.5 g of a high molecular weight copolymer (BEAMSET 371, manufactured by Arakawa Chemical Industries, Epoxy Acrylate, molecular weight: 40,000), 20 g of methyl ethyl ketone, and 0.5 g of a leveling agent (Tego wet 270) were uniformly mixed, and 2 g of acrylic-styrene copolymer resin fine particles having a refractive index of 1.525 (volume average particle diameter: 2 mm, manufactured by Sekisui Plastic) was added thereto to prepare a hard coating composition.

The hard coating liquid composition thus obtained was coated onto a triacetyl cellulose film with a #10 Mayer bars and dried at 90 °C for 1 minute.

UV rays at 150 mJ/cm² were then irradiated onto the dried product to obtain a hard coating film (HD1) having a thickness of 10 *µ*m.

### <Synthesis Example: Preparation of polysilsesquioxane (POSS)>

### Synthesis Example 1: Preparation of POSS1

A 1 L reactor equipped with a nitrogen gas introducing tube, a condenser, and a stirrer was charged with 36.57 g (0.156 mol) of isooctyltrimethoxy silane, 23.34 g (0.094 mol) of 3-methacyloxypropyl trimethoxysilane, and 500 mL of methanol, and the mixture was stirred at room temperature for 10 minutes.

Thereafter, 280 g (0.77 mol, 25 wt% in methanol) of tetramethylammonium hydroxide was added and the temperature of the reactor was raised to 60 °C under a nitrogen atmosphere, and the reaction was carried out for 8 hours.

After completion of the reaction, 15 g of polyhedral oligomeric silsesquioxane (POSS) substituted with an isooctyl group and a methacryloxypropyl group was obtained through column chromatography and recrystallization.

As a result of GC chromatography, it was confirmed that the molar ratio of the methacryloxypropyl group to the isoctyl group substituted in the silicon of the polysilsesquioxane was about 0.6 to 1.67.

### Synthesis Example 2: Preparation of POSS2

A1 L reactor equipped with a nitrogen gas introducing tube, a condenser, and a stirrer was charged with 22.03 g (0.094 mol) of isooctyltrimethoxy silane, 38.74 g (0.156 mol) of 3-methacyloxypropyl trimethoxysilane, and 500 mL of methanol, and the mixture was stirred at room temperature for 10 minutes.

Thereafter, 280 g (0.77 mol, 25 wt% in methanol) of tetramethylammonium hydroxide was added and the temperature of the reactor was raised to 60 °C under a nitrogen atmosphere, and the reaction was carried out for 8 hours.

After completion of the reaction, 18 g of polyhedral oligomeric silsesquioxane (POSS) substituted with an isooctyl group and a methacryloxypropyl group was obtained through column chromatography and recrystallization.

As a result of GC chromatography, it was confirmed that the molar ratio of the methacryloxypropyl group to the isoctyl group substituted in the silicon of the polysilsesquioxane was about 1.67 to 3.

### Synthesis Example 3: Preparation of POSS3

A 1 L reactor equipped with a nitrogen gas introducing tube, a condenser, and a stirrer was charged with 62 g (0.25 mol) of 3-methacyloxypropyl trimethoxysilane, and 500 mL of methanol, and the mixture was stirred at room temperature for 10 minutes.

Thereafter, 280 g (0.77 mol, 25 wt% in methanol) of tetramethylammonium hydroxide was added and the temperature of the reactor was raised to 60°C under a nitrogen atmosphere, and the reaction was carried out for 8 hours.

After completion of the reaction, 20 g of polyhedral oligomeric silsesquioxane (POSS) substituted with an isooctyl group and a methacryloxypropyl group was obtained through column chromatography and recrystallization.

As a result GC chromatography, it was confirmed that about 100 % of the methacryloxypropyl group was substituted in the silicon of the polysilsesquioxane.

### <Examples and Comparative Examples: Preparation of antireflection film>

### (1) Preparation of photocurable coating composition for the preparation of a low refractive index layer

The components in Table 1 below were mixed and diluted with MIBK (methyl isobutyl ketone) solvent so that the solid content became 3 % by weight.

**[Table 1] (unit: g)**

| | LR1 | LR2 | LR3 | LR4 | LR5 | LR6 | LR7 | LR8 | LR9 |
|---|---|---|---|---|---|---|---|---|---|
| THRULYA4320 | 250 | 250 | 250 | 220 | 220 | 220 | 220 | 220 | 220 |
| Dipentaerythritol pentaacrylate | 40 | 37 | 34 | 42 | 39 | 39 | 36 | 32 | 39 |
| Polysilsesquioxane | | EP040 8 | POSS3 | | EP040 8 | POSS1 | POSS2 | POSS 3 | 0 |
| | 0 | 3 | 6 | 0 | 3 | 3 | 6 | 10 | |
| Nano silica (MEK-AC-2101) | 0 | 0 | 0 | 0 | 0 | 0 | 0 | 7.5 | 7.5 |
| Irgacure-184 | 6 | 6 | 6 | 6 | 6 | 6 | 6 | 6 | 6 |
| Fluorine-based compound containing a photoreactive functional group | LE604 | | | RS907 | | | | | |
| | 13.3 | 13.3 | 13.3 | 26.7 | 26.7 | 26.7 | 26.7 | 26.7 | 26.7 |

1) THRULYA 4320 (manufactured by Catalysts and Chemicals Ltd.): Hollow silica dispersion liquid (solid content of 20 wt% in MIBK solvent),
2) RS907 (manufactured by DIC): Fluorine-based compound containing a photoreactive functional group, diluted to a solid content of 30 % by weight in MIBK solvent.
3) LE604 (manufactured by Kyoeisha): Fluorine-based compound containing a photoreactive functional group and containing a trace amount of silicon, diluted to a solid content of 30 % by weight in 1-butanol solvent
4) EP0408: manufactured by Hybrid Plastics.
5) MEK-AC-2101 (manufactured by Nissan Chemical Co.): Nano-silica dispersion, diluted to a solid content of 40 % in MEK solvent.

### (2) Preparation of low refractive index layer and antireflection film (Examples 1 and 2 and Comparative Example)

The photocurable coating compositions respectively obtained from Table 1 above were coated onto the hard coating films shown in Table 2 below with a #3 Mayer bars and dried at 60 °C for 1 minute.

Then, ultraviolet rays at 180 mJ/m² were irradiated onto the dried product under nitrogen purging to form a low refractive index layer having a thickness of 110 nm, thereby producing an antireflection film.

### <Experimental Example: Measurement of physical properties of antireflection film>

For the antireflection films obtained in the examples and comparative examples, experiments of the following items were carried out.

### 1. Alkaline pretreatment

The antireflection films obtained in Examples 1 and 2 and the comparative examples were respectively immersed at 30 °C for 3 minutes in an aqueous NaOH solution diluted to 10 % with distilled water, and washed by pouring water, followed by wiping off moisture.

### 2. Measurement of average reflectance and color coordinate value (b*)

By using SolidSpec 3700 (SHIMADZU) before and after the pretreatment, the average reflectance and the color coordinate values in the wavelength region of 480 nm to 780 nm were measured by applying a measure mode when HD1 was used as the hard coating films in the following examples and comparative examples, and by applying the 100 % T mode when HD2 was used as the hard coating film.

### 3. Measurement of scratch resistance

Before and after the pretreatment, the surface of the antireflection films obtained in the examples and comparative examples were rubbed back and forth 10 times with steel wool under a load at a speed of 24 rpm.

The scratch resistance was evaluated by confirming the maximum load at which a scratch of 1 cm or less observed with the naked eye was 1 or less.

**[Table 2]**

| | low refractiv e index layer | Hard coatin g film | Average reflectance | | b* | | | Scratch resistance (g) | |
|---|---|---|---|---|---|---|---|---|---|
| | | | Before pretreat ment | After pretreat ment | Before pretreat ment | After pretreat ment | Difference between before and after pretreatme nt (Δ) | Before pretreat ment | After pretreat ment |
| Example 1 | LR2 | HD1 | 0.95 | 0.95 | -2.6 | -2.2 | 0.4 | 300 | 250 |
| Example 2 | LR2 | HD2 | 0.96 | 0.96 | -2.2 | -2 | 0.2 | 200 | 200 |
| Example 3 | LR3 | HD1 | 0.95 | 0.95 | -2.7 | -2.4 | 0.3 | 300 | 250 |
| Example 4 | LR5 | HD1 | 1.28 | 1.27 | -2.1 | -1.9 | 0.2 | 400 | 350 |
| Example 5 | LR5 | HD2 | 1.27 | 1.27 | -1.8 | -1.7 | 0.1 | 250 | 250 |
| Example 6 | LR6 | HD1 | 1.27 | 1.26 | -2.8 | -2.5 | 0.3 | 400 | 400 |
| Example 7 | LR6 | HD2 | 1.27 | 1.27 | -2.5 | -2.1 | 0.4 | 300 | 250 |
| Example 8 | LR7 | HD1 | 1.26 | 1.26 | -3 | -2.65 | 0.35 | 400 | 350 |
| Compara tive Example 1 | LR1 | HD1 | 0.94 | 0.95 | -2.5 | -1.7 | 0.8 | 100 | 50 |
| Compara tive Example 2 | LR4 | HD1 | 1.27 | 1.26 | -2 | -1.3 | 0.7 | 150 | 100 |
| Compara tive Example 3 | LR4 | HD2 | 1.27 | 1.26 | -2 | -1.3 | 0.7 | 200 | 150 |
| Compara tive Example 4 | LR8 | HD1 | 1.26 | 1.26 | -2.3 | -1.9 | 0.4 | 150 | 100 |
| Compara tive Example 5 | LR8 | HD2 | 1.27 | 1.26 | -2.2 | -1.9 | 0.3 | 150 | 150 |
| Compara tive Example 6 | LR9 | HD2 | 1.25 | 1.25 | -2.0 | -1.0 | 1.0 | 300 | 250 |

As shown in Table 2, it was confirmed that the antireflection films of the examples not only had no large change in the average reflectance and the color coordinate value even before and after the alkali treatment, but also had better scratch resistance than the comparative examples.

Particularly, the antireflection film of the examples had relatively high scratch resistance both before and after the alkali treatment, while ensuring low reflectance and high transparency.

Further, in Examples 3, 6, 7, and 8, in the case of the antireflection film produced using POSS having a molar ratio of the reactive functional group to the non-functional reactive group of 0.20 or more, it was also confirmed that relatively high scratch resistance could be ensured both before and after the alkali treatment while ensuring low reflectance and high transparency.

On the other hand, it was confirmed that the antireflection films of Comparative Examples 1 to 5 not only had a relatively large change in the color coordinate values after alkaline treatment, but also had low scratch resistance. In addition, it was confirmed that the antireflection film of Comparative Example 6 containing nano silica could ensure scratch resistance but the color coordinate values greatly changed after the alkali treatment.

In the case of the low antireflection films of the examples, because appearance characteristics such as reflectance or light transmittance or mechanical properties such as abrasion resistance and scratch resistance were not greatly reduced even when exposed to an alkali, the process of applying an additional protection film for protecting the outer surface could be omitted, and thus the production process could be simplified and production costs could be reduced.

## Claims

1. A photocurable coating composition for forming a low refractive index layer, comprising: a photopolymerizable compound, wherein the photopolymerizable compound is a monomer containing one or more (meth)acrylate or vinyl groups; inorganic fine particles; a polysilsesquioxane substituted with one or more reactive functional groups; a fluorine-based compound containing a photoreactive functional group, wherein the fluorine-based compound containing the photoreactive functional group has a weight-average molecular weight of 2000 to 200,000; and a photopolymerization initiator,
wherein the polysilsesquioxane substituted with one or more reactive functional groups is contained in an amount of 0.5 to 25 parts by weight based on 100 parts by weight of the photopolymerizable compound, **characterized in that** the inorganic fine particles are hollow silica particles having a number average particle diameter of 10 nm to 100 nm.

2. The photocurable coating composition of claim 1, wherein the photocurable coating composition includes 1.5 to 19 parts by weight of the polysilsesquioxane substituted with one or more reactive functional groups based on 100 parts by weight of the photopolymerizable compound.

3. The photocurable coating composition of claim 1, wherein at least one silicon atom of the polysilsesquioxane substituted with one or more reactive functional groups is substituted with reactive functional groups, and the remaining silicon atoms in which unreactive functional groups are substituted are substituted with unreactive functional groups.

4. The photocurable coating composition of claim 3, wherein the molar ratio of the reactive functional group to the unreactive functional group substituted in the polysilsesquioxane is 0.20 or more.

5. The photocurable coating composition of claim 1,
wherein the fluorine-based compound containing the photoreactive functional group has a fluorine content of 1 to 25 % by weight.

6. The photocurable coating composition of claim 1, wherein the fluorine-based compound containing the photoreactive functional group includes at least one selected from the group consisting of: i) an aliphatic compound or an aliphatic cyclic compound in which at least one photoreactive functional group is substituted and at least one fluorine is substituted on at least one carbon; ii) a heteroaliphatic compound or a heteroaliphatic cyclic compound in which at least one photoreactive functional group is substituted, at least one hydrogen is substituted with fluorine, and at least one carbon is substituted with silicon; iii) a polydialkylsiloxane-based polymer in which at least one photoreactive functional group is substituted and at least one fluorine is substituted on at least one silicon; and iv) a polyether compound in which at least one photoreactive functional group is substituted and at least one hydrogen is substituted with fluorine.

7. The photocurable coating composition of claim 1,
wherein the coating composition may contain 1 to 75 parts by weight of the fluorine-based compound containing the photoreactive functional group based on 100 parts by weight of the photopolymerizable compound.

8. A low refractive index layer comprising: a cured product of the photocurable coating composition of claim 1.

9. The low refractive index layer of claim 8, comprising a crosslinked polymer between a photopolymerizable compound, a fluorine-containing compound having a photoreactive functional group, and polysilsesquioxane substituted with one or more one reactive functional groups, and inorganic fine particles dispersed in the binder resin.

10. The low refractive index layer of claim 9, wherein the weight ratio of the portion derived from the polysilsesquioxane substituted with one or more reactive functional groups to the portion derived from the photopolymerizable compound in the binder resin is 0.005 to 0.25.

11. An antireflection film comprising the low refractive index layer of claim 8, and a hard coating layer formed on one surface of the low refractive index layer.

12. The antireflection film of claim 11, wherein the hard coating film comprises a binder resin containing a photocurable resin and a high molecular weight (co)polymer having a weight average molecular weight of 10,000 or more, and an organic or inorganic fine particle dispersed in the binder resin.

13. The antireflection film of claim 11, wherein the hard coating film includes a binder resin of a photocurable resin, and an antistatic agent dispersed in the binder resin.

## Patentansprüche

1. Photohärtbare Beschichtungszusammensetzung zur Bildung einer Schicht mit niedrigem Brechungsindex, die eine photopolymerisierbare Verbindung, wobei die photopolymerisierbare Verbindung ein Monomer ist, das eine oder mehrere (Meth)acrylat- oder Vinylgruppen enthält; anorganische feine Teilchen; ein Polysilsesquioxan, das mit einer oder mehreren reaktiven funktionellen Gruppen substituiert ist; eine Verbindung auf Basis von Fluor, die eine photoreaktive funktionelle Gruppe enthält, wobei die Verbindung auf Basis von Fluor, die die photoreaktive funktionelle Gruppe enthält, ein gewichtsmittleres Molekulargewicht von 2000 bis 200.000 aufweist; und einen Photopolymerisationsinitiator umfasst,
wobei das mit einer oder mehreren reaktiven funktionellen Gruppen substituierte Polysilsesquioxan in einer Menge von 0,5 bis 25 Gew.-Teilen, bezogen auf 100 Gew.-Teile der photopolymerisierbaren Verbindung, enthalten ist, **dadurch gekennzeichnet, dass** die anorganischen feinen Teilchen hohle Siliciumdioxidteilchen mit einem zahlenmittleren Teilchendurchmesser von 10 nm bis 100 nm sind.

2. Photohärtbare Beschichtungszusammensetzung nach Anspruch 1, bei der die photohärtbare Beschichtungszusammensetzung 1,5 bis 19 Gewichtsteile des mit einer oder mehreren reaktiven funktionellen Gruppen substituierten Polysilsesquioxans, bezogen auf 100 Gewichtsteile der photopolymerisierbaren Verbindung, enthält.

3. Photohärtbare Beschichtungszusammensetzung nach Anspruch 1, bei der mindestens ein Siliciumatom des Polysilsesquioxans, das mit einer oder mehreren reaktiven funktionellen Gruppen substituiert ist, mit reaktiven funktionellen Gruppen substituiert ist und die verbleibenden Siliciumatome, an denen nicht reaktive funktionelle Gruppen substituiert sind, mit nicht reaktiven funktionellen Gruppen substituiert sind.

4. Photohärtbare Beschichtungszusammensetzung nach Anspruch 3, bei der das Molverhältnis der reaktiven funktionellen Gruppe zu der nicht reaktiven funktionellen Gruppe, die in dem Polysilsesquioxan substituiert ist, 0,20 oder mehr beträgt.

5. Die photohärtbare Beschichtungszusammensetzung nach Anspruch 1,
bei der die Verbindung auf Basis von Fluor, die die photoreaktive funktionelle Gruppe enthält, einen Fluorgehalt von 1 bis 25 Gew.-% aufweist.

6. Photohärtbare Beschichtungszusammensetzung nach Anspruch 1, bei der die Verbindung auf Basis von Fluor, die die photoreaktive funktionelle Gruppe enthält, mindestens eines aus der Gruppe bestehend aus: i) einer aliphatischen Verbindung oder einer aliphatischen cyclischen Verbindung, in der mindestens eine photoreaktive funktionelle Gruppe substituiert ist und mindestens ein Fluor an mindestens einem Kohlenstoff substituiert ist; ii) einer heteroaliphatischen Verbindung oder einer heteroaliphatischen cyclischen Verbindung, in der mindestens eine photoreaktive funktionelle Gruppe substituiert ist, mindestens ein Wasserstoff mit Fluor substituiert ist und mindestens ein Kohlenstoff mit Silicium substituiert ist; iii) ein Polymer auf Basis von Polydialkylsiloxan, in dem mindestens eine photoreaktive funktionelle Gruppe substituiert ist und mindestens ein Fluor an mindestens einem Silicium substituiert ist; und iv) eine Polyetherverbindung, in der mindestens eine photoreaktive funktionelle Gruppe substituiert ist und mindestens ein Wasserstoff mit Fluor substituiert ist, enthält.

7. Die photohärtbare Beschichtungszusammensetzung nach Anspruch 1,
bei der die Beschichtungszusammensetzung 1 bis 75 Gewichtsteile der Verbindung auf Basis von Fluor, die die photoreaktive funktionelle Gruppe enthält, bezogen auf 100 Gewichtsteile der photopolymerisierbaren Verbindung, enthalten kann.

8. Schicht mit niedrigem Brechungsindex, die ein gehärtetes Produkt der photohärtbaren Beschichtungszusammensetzung nach Anspruch 1 umfasst.

9. Schicht mit niedrigem Brechungsindex nach Anspruch 8, die ein zwischen einer photopolymerisierbaren Verbindung, einer fluorhaltigen Verbindung mit einer photoreaktiven funktionellen Gruppe und Polysilsesquioxan, das mit einer oder mehreren reaktiven funktionellen Gruppen substituiert ist, vernetztes Polymer und anorganische feine Teilchen, die in dem Bindemittelharz dispergiert sind, umfasst.

10. Schicht mit niedrigem Brechungsindex nach Anspruch 9, bei der das Gewichtsverhältnis des Anteils, der sich von dem mit einer oder mehreren reaktiven funktionellen Gruppen substituierten Polysilsesquioxan ableitet, zu dem Anteil, der sich von der photopolymerisierbaren Verbindung in dem Bindemittelharz ableitet, 0,005 bis 0,25 beträgt.

11. Antireflexionsfilm, der die Schicht mit niedrigem Brechungsindex nach Anspruch 8 und eine harte Deckschicht, die auf einer Oberfläche der Schicht mit niedrigem Brechungsindex ausgebildet ist, umfasst.

12. Antireflexionsfilm nach Anspruch 11, bei dem die harte Deckschicht ein Bindemittelharz, das ein photohärtbares Harz und ein (Co)polymer mit hohem Molekulargewicht enthält, das ein gewichtsmittleres Molekulargewicht von 10.000 oder mehr aufweist, und ein organisches oder anorganisches feines Teilchen, das in dem Bindemittelharz dispergiert ist, umfasst.

13. Antireflexionsfilm nach Anspruch 11, bei dem die harte Deckschicht ein Bindemittelharz aus einem photohärtbaren Harz und ein in dem Bindemittelharz dispergiertes Antistatikmittel enthält.

## Revendications

1. Composition de revêtement photodurcissable permettant de former une couche à faible indice de réfraction, comprenant :
un composé photopolymérisable, dans laquelle le composé photopolymérisable est un monomère contenant un ou plusieurs groupes (méth)acrylate ou vinyle ;
des nanoparticules inorganiques ;
un polysilsesquioxane substitué par un ou plusieurs groupes fonctionnels réactifs ;
un composé à base de fluor contenant un groupe fonctionnel photoréactif, dans laquelle le composé à base de fluor contenant le groupe fonctionnel photoréactif a une masse moléculaire moyenne en poids comprise entre 2000 et 200 000 ; et
un initiateur de photopolymérisation,
dans laquelle le polysilsesquioxane substitué par un ou plusieurs groupes fonctionnels réactifs est contenu dans une quantité comprise entre 0,5 et 25 parties en poids sur la base de 100 parties en poids du composé photopolymérisable, **caractérisé en ce que** les particules fines inorganiques sont des particules de silice creuses ayant un diamètre de particule moyen en nombre compris entre 10 nm et 100 nm.

2. Composition de revêtement photodurcissable selon la revendication 1, dans laquelle la composition de revêtement photodurcissable inclut entre 1,5 et 19 parties en poids du polysilsesquioxane substitué par un ou plusieurs groupes fonctionnels réactifs sur la base de 100 parties en poids du composé photopolymérisable.

3. Composition de revêtement photodurcissable selon la revendication 1, dans laquelle un ou plusieurs atomes de silicium du polysilsesquioxane substitué par un ou plusieurs groupes fonctionnels réactifs est substitué par des groupes fonctionnels réactifs, et les atomes de silicium restants dans lequel des groupes fonctionnels non réactifs sont substitués par des groupes fonctionnels non réactifs.

4. Composition de revêtement photodurcissable selon la revendication 3, dans laquelle le rapport molaire du groupe fonctionnel réactif au groupe fonctionnel non réactif substitué dans le polysilsesquioxane est égal ou supérieur à 0,20.

5. Composition de revêtement photodurcissable selon la revendication 1,
dans laquelle le composé à base de fluor contenant le groupe fonctionnel photoréactif a une teneur en fluor comprise entre 1 et 25 % en poids.

6. Composition de revêtement photodurcissable selon la revendication 1, dans laquelle le composé à base de fluor contenant le groupe fonctionnel photoréactif inclut un ou plusieurs composés sélectionnés dans le groupe constitué de :
i) un composé aliphatique ou un composé cyclique aliphatique dans lequel au moins un groupe fonctionnel photoréactif est substitué et au moins un fluor est substitué sur au moins un carbone ;
ii) un composé hétéroaliphatique ou un composé cyclique hétéroaliphatique dans lequel au moins un groupe fonctionnel photoréactif est substitué, au moins un hydrogène est substitué par un fluor, et au moins un carbone est substitué par un silicium ;
iii) un polymère à base de polydialkylsiloxane dans lequel au moins un groupe fonctionnel photoréactif est substitué et au moins un fluor est substitué sur au moins un silicium ; et
iv) un composé de polyéther dans lequel au moins un groupe fonctionnel photoréactif est substitué et au moins un hydrogène est substitué par un fluor.

7. Composition de revêtement photodurcissable selon la revendication 1,
dans laquelle la composition de revêtement peut contenir entre 1 et 75 parties en poids du composé à base de fluor contenant le groupe fonctionnel photoréactif sur la base de 100 parties en poids du composé photopolymérisable.

8. Couche à faible indice de réfraction comprenant :
un produit durci de la composition de revêtement photodurcissable selon la revendication 1.

9. Couche à faible indice de réfraction selon la revendication 8, comprenant un polymère réticulé entre un composé photopolymérisable, un composé contenant du fluor ayant un groupe fonctionnel photoréactif, et un polysilsesquioxane substitué par un ou plusieurs groupes fonctionnels réactifs, et des particules inorganiques dispersées dans la résine liante.

10. Couche à faible indice réactif selon la revendication 9, dans laquelle le rapport en poids de la portion dérivée du polysilsesquioxane substitué par un ou plusieurs groupes fonctionnels réactifs à la partie dérivée du composé photopolymérisable dans la résine liante est comprise entre 0,005 et 0,25.

11. Film antireflet comprenant la couche à faible indice de réfraction selon la revendication 8, et une couche de revêtement dur formée sur une surface de la couche à faible indice de réfraction.

12. Film antireflet selon la revendication 11, dans lequel le film de revêtement dur comprend une résine liante contenant une résine photodurcissable et un (co)polymère à poids moléculaire élevé ayant une masse moléculaire moyenne en poids égale ou supérieure à 10 000, et une particule fine organique ou inorganique dispersée dans la résine liante.

13. Film antireflet selon la revendication 11, dans lequel le film de revêtement dur inclut une résine liante d'une résine photodurcissable et un agent antistatique dispersé dans la résine liante.
